# FASCICULE DE BREVET EUROPEEN

(11) **EP 2 332 782 B1**
(45) Date de publication et mention de la délivrance du brevet: **08.01.2014**
(21) Numéro de dépôt: 10192157.5
(22) Date de dépôt: 23.11.2010
(51) Int. Cl.: B60R 11/02, H04R 1/02, H04R 1/24

(54) **Arrangement d'un support de haut parleur d'aigu sur un support haut-parleur**
Tweeter-Halterung-Anordnung über einer Lautsprecherhalterung
Tweeter support arrangement over a speaker support

(30) Priorité: 11.12.2009 FR 0958874
(43) Date de publication de la demande: 15.06.2011
(73) Titulaire: Peugeot Citroën Automobiles SA, 78140 Vélizy-Villacoublay (FR)
(72) Inventeur: Mauvais, Frédéric, 25150, AUTECHAUX ROIDE (FR)

(56) Documents cités:
- GB-A- 2 063 618
- US-A- 5 568 562

## Description

La présente invention concerne un arrangement d'un support de haut parleur d'aigu appelé tweeter sur un support haut-parleur.

Les véhicules automobiles contemporains sont de plus en plus équipés de systèmes audio d'une bonne qualité. Pour améliorer la performance de ces systèmes, il y a plusieurs haut-parleurs pour des bandes de fréquence différentes. Ainsi, on applique d'une manière usuelle un petit haut-parleur d'aigu pour les hautes fréquences appelé ci-après "tweeter" et un haut-parleur aux dimensions plus grandes pour les fréquences basses et moyennes. Ces deux haut-parleurs sont arrangés de manière usuelle l'un près de l'autre, par exemple dans les portières des véhicules. Ils sont fixés sur le garnissage de portière en intercalant des supports haut-parleur et tweeter, respectivement. Le support dudit tweeter a entre autres la fonction de disposer sa face frontale au même niveau que celle du haut-parleur. Un support de tweeter pour l'installation dans un véhicule automobile est connu de la demande de brevet japonais JP 2003260989 A. Ce support a comme fonction de faciliter le montage du tweeter dans un véhicule automobile et constitue en même temps un dispositif anti-vol.

La demande de brevet américain US 2003/0019983 A1 décrit également un support d'un haut-parleur qui facilite le montage du haut-parleur dans un véhicule automobile et évite l'endommagement du haut-parleur.

Aucun des deux documents ne prévoit de combiner deux supports d'un tweeter et d'un haut-parleur en les fixant l'un à l'autre.

Le document GB2063618 divulgue, lui, un arrangement d'un support de tweeter sur un support de haut-parleur, le support de haut-parleur de forme essentiellement annulaire, comprenant sur une partie de sa surface extérieure une rainure circulaire pour recevoir un pied de montage du support de tweeter de forme appropriée. La surface interne de la rainure circulaire et la surface du pied de montage du support de tweeter comprend des moyens de butée et des moyens de vissage coopérant pour al fixation du support de tweeter sur le support de haut-parleur.

C'est l'objet de la présente invention de proposer un arrangement d'un support de tweeter sur un support haut-parleur qui apporte un montage simplifié, un gain de temps de montage, un gain économique et qui peut être monté sans aucun moyen de fixation, à savoir sans vis ou rivets, etc.

Ce but est atteint par un arrangement d'un support de tweeter sur un support haut-parleur dans lequel le support haut-parleur, de forme essentiellement annulaire, comprend sur une partie de sa surface extérieure une rainure circulaire pour recevoir un pied de montage du support de tweeter de forme appropriée, la surface interne de la rainure circulaire et la surface du pied de montage du support de tweeter comprenant des moyens de butée et des moyens de clippage coopérant pour la fixation du support de tweeter sur le support haut-parleur, la rainure circulaire comprenant sur ses bords latéraux des ouvertures pour recevoir dans la position finale du montage du support de tweeter des têtes protubérantes des bras élastiques de clippage, formées sur au moins une surface latérale du pied de montage.

Suivant une autre caractéristique de l'arrangement selon l'invention, la fixation du support de tweeter sur le support haut-parleur dans sa position finale est réalisée par le positionnement en butée des nervures transversales dans les rainures transversales correspondantes, prévues au fond de la rainure circulaire et sur la surface-"semelle" du pied de montage du support de tweeter et l'encliquetage des moyens de clippage.

Selon une autre particularité, les rainures transversales sont prévues au fond de la rainure circulaire et les nervures transversales sont prévues sur la surface-"semelle" du pied de montage du support de tweeter.

Selon une autre caractéristique de l'invention, les bras élastiques de clippage s'étendent parallèlement à la surface-"semelle" du pied de montage du support de tweeter dans au moins une des surfaces latérales du pied et la tête protubérante est chanfreinée latéralement pour faciliter l'insertion du pied de montage dans la rainure circulaire.

Selon une autre particularité, le pied de montage comprend un fût de vissage pour visser le pied de montage sur un bord de la rainure circulaire comprenant un trou de vissage correspondant.

De préférence, le support de tweeter et le support haut-parleur sont fabriqués en matière plastique.

Selon une autre caractéristique de l'invention, le tweeter, le haut-parleur et leurs supports font partie d'un équipement audio pour un véhicule automobile.

L'invention sera mieux comprise à la lecture de la description qui va suivre, donnée uniquement à titre d'exemple et faite en se référant aux dessins, sur lesquels:
- Fig.1: montre une vue en éclaté d'un arrangement d'un haut-parleur et d'un tweeter sur le garnissage de portière d'un véhicule;
- Fig.2: montre un support de tweeter selon un mode de réalisation de l'invention;
- Fig.3: montre le support de tweeter de Fig.2 monté sur un support haut-parleur;
- Fig. 4a, Fig.4b: montrent les étapes de la fixation du support de tweeter sur le support haut-parleur; et
- Fig. 5: montre une coupe transversale du support de tweeter fixé sur le support haut-parleur.

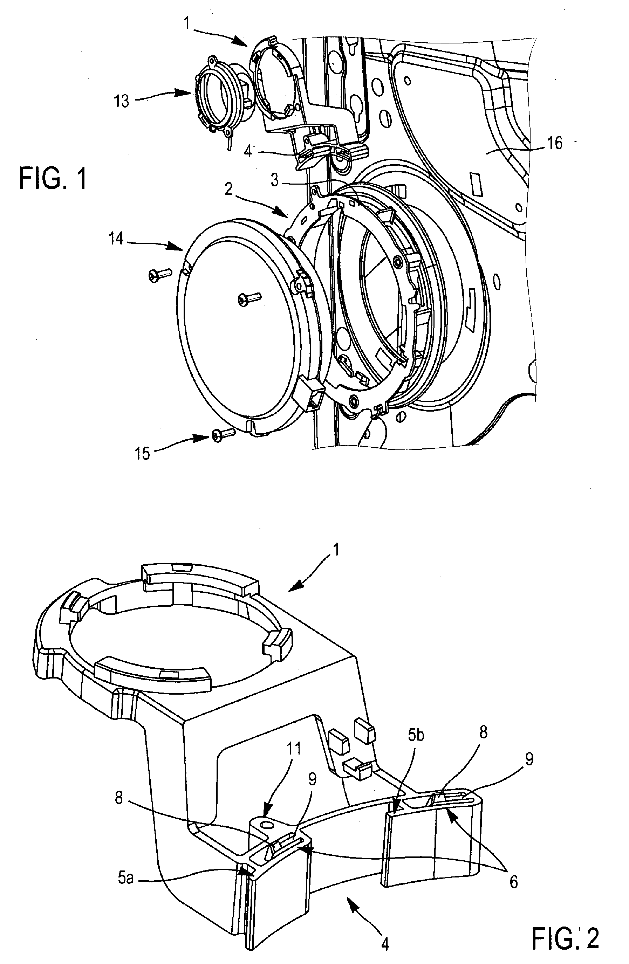

Comme on voit sur Fig.1, un haut-parleur 14 est à monter sur un garnissage de portière 16 et un tweeter 13 est à monter par l'intermédiaire d'un support de tweeter 1 sur un support haut-parleur 2. Le support haut-parleur 2 est essentiellement de forme annulaire et comporte sur une partie de la surface extérieure une rainure circulaire 3. Le haut-parleur 14 est vissé sur son support 2 par des vis 15 et le tweeter 13 est fixé sur le support de tweeter par une fermeture à baïonnette .

Fig.2 montre le support de tweeter 1 de manière plus détaillée. Le support de tweeter 1 comprend un pied de montage qui doit être posé sur le fond de la rainure circulaire 3. Le pied de montage 4 du support de tweeter comprend sur sa surface-"semelle" deux nervures transversales 5a, 5b et des bras élastiques 9 avec une tête protubérante 8 à leur extrémité libre. Les bras élastiques 9 forment une partie des moyens de clippage ce qui sera décrit ultérieurement en détail. Sur la face arrière de la surface-"semelle" du pied de montage 4, on voit un fût de vissage 11 pour visser le support de tweeter 1 sur les bords de la rainure circulaire 3, si nécessaire. Le vissage est uniquement optionnel en cas de vibration trop importante.

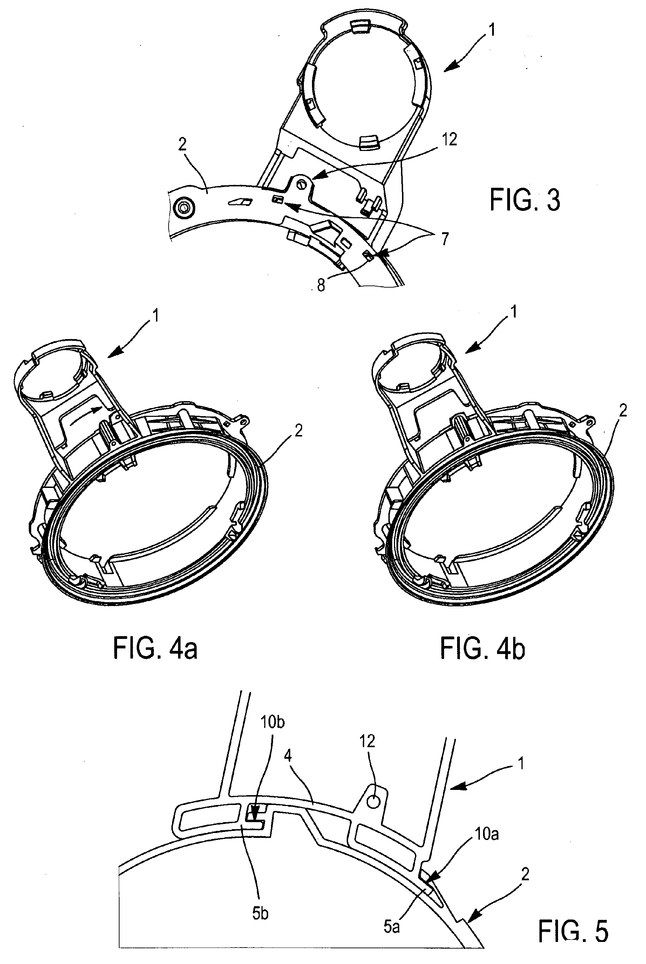

Sur Fig.3, on voit le support de tweeter posé au fond de la rainure circulaire 3 du support haut-parleur 2. Une languette 12 percée d'un trou de vissage se trouve en face du fût de vissage sur le pied de montage 4 du support de tweeter 1 et un vissage supplémentaire peut être effectué au besoin.

Les deux têtes protubérantes 8 des bras élastiques de clippage 9 comprennent des chanfreins latéraux pour faciliter leur entrée dans les ouvertures 7 pratiquées dans une des parois verticales de la rainure circulaire 3. De telles ouvertures 7 peuvent être prévues comme les bras élastiques 9 également des deux côtés de la rainure 3 ou du pied de montage 4, respectivement. Il est néanmoins suffisant de les prévoir uniquement d'un côté.

Figs. 4a et 4b montrent le support de tweeter 1 sur le support haut-parleur 2 avant l'encliquetage (Fig. 4a) et dans sa position finale encliqueté (Fig. 4b).

Fig.5 montre une coupe transversale à travers les deux supports 1, 2. Comme on voit, les nervures 5a, 5b sont bien entrées dans des rainures 10a, 10b et le pied de montage 4 bute contre les bords des rainures 10a, 10b. La rainure 10a a une section transversale qui s'amincit vers le fond de la rainure 10a ce qui a pour effet de créer une rétention élastique, quand le pied de montage 4 est encliqueté dans le trou 7 sur le bord de la rainure circulaire 3.

L'arrangement du support de tweeter sur le support haut-parleur tel que décrit ci-dessus a l'avantage d'un montage simplifié car on n'a besoin ni d' outils, ni de moyens de fixation. On gagne du temps pendant le montage et comme la solution proposée est très simple, on peut réaliser en même temps un gain économique.

## Revendications

1. Arrangement d'un support de tweeter (1) sur un support haut-parleur (2), le support haut-parleur (2), de forme essentiellement annulaire, comprenant sur une partie de sa surface extérieure une rainure circulaire (3) pour recevoir un pied de montage (4) du support de tweeter (1) de forme appropriée, **caractérisé en ce que** la surface interne de la rainure circulaire (3) et la surface du pied de montage (4) du support de tweeter (1) comprenant des moyens de butée (5a) (5b) et des moyens de clippage (6) coopérant pour la fixation du support de tweeter (1) sur le support haut-parleur (2) et **en ce que** la rainure circulaire (3) comprend sur ses bords latéraux des ouvertures (7) pour recevoir dans la position finale du montage du support de tweeter (1) des têtes protubérantes (8) des bras élastiques de clippage (9), formées sur au moins une surface latérale du pied de montage (4).

2. Arrangement selon la revendication 1, **caractérisé en ce que** la fixation du support de tweeter (1) sur le support haut-parleur (2) dans sa position finale est accomplie par le positionnement en butée des nervures transversales (5a, 5b) dans les rainures transversales (10a, 10b) correspondantes, prévues au fond de la rainure circulaire (3) et sur la surface-"semelle" du pied de montage (4) du support de tweeter (1) et l'encliquetage des moyens de clippage (6).

3. Arrangement selon la revendication 2, **caractérisé en ce que** les rainures transversales (10a, 10b) sont prévues au fond de la rainure circulaire (3) et les nervures transversales (5a, 5b) sont prévues sur la surface-"semelle" du pied de montage (4) du support de tweeter (1).

4. Arrangement selon la revendication 1, **caractérisé en ce que** les bras élastiques de clippage (9) s'étendent en parallèle à la surface-"semelle" du pied de montage du support de tweeter dans au moins une des surfaces latérales du pied (4) et la tête protubérante (8) est chanfreinée latéralement pour faciliter l'insertion du pied de montage (4) dans la rainure circulaire (3).

5. Arrangement selon une des revendications précédentes, **caractérisé en ce que** le pied de montage (4) comprend un fût de vissage (11) pour visser le pied de montage (4) sur un bord de la rainure circulaire (3) comprenant un trou de vissage (12) correspondant.

6. Arrangement selon une des revendications précédentes, **caractérisé en ce que** le support de tweeter (1) et le support haut-parleur (2) sont fabriqués en matière plastique.

7. Arrangement selon une des revendications précédentes, **caractérisé en ce que** le tweeter, le haut-parleur et leurs supports font partie d'un équipement audio pour un véhicule automobile.

## Patentansprüche

1. Anordnung einer Tweeter-Halterung (1) auf einer Lautsprecher-Halterung (2), wobei die Lautsprecher-Halterung (2) mit im Wesentlichen ringförmiger Form auf einem Teil ihrer äußeren Oberfläche eine kreisförmige Rille (3) zum Aufnehmen eines Montagefußes (4) der Tweeter-Halterung (1) mit angepasster Form aufweist, **dadurch gekennzeichnet, dass** die interne Oberfläche der kreisförmigen Rille (3) und die Oberfläche des Montagefußes (4) der Tweeter-Halterung (1) Anschlagmittel (5a) (5b) und Clipsmittel (6) aufweisen, die zum Befestigen der Tweeter-Halterung (1) auf der Lautsprecher-Halterung (2) zusammenwirken, und dass die kreisförmige Rille (3) auf ihren seitlichen Rändern Öffnungen (7) aufweist, um in der Position der Endmontage der Tweeter-Halterung (1) vorstehende Köpfe (8) der elastischen Clipsarme (9), die auf mindestens einer seitlichen Oberfläche des Montagefußes (4) ausgebildet sind, aufzunehmen.

2. Anordnung nach Anspruch 1, **dadurch gekennzeichnet, dass** die Befestigung der Tweeter-Halterung (1) auf der Lautsprecher-Halterung (2) in ihrer Endposition durch das Positionieren in Anschlag der Querrippen (5a, 5b) in den entsprechenden Querrillen (10a, 10b), die auf dem Grund der kreisförmigen Rille (3) vorgesehen sind und auf der "Sohlen"-Oberfläche des Montagefußes (4) der Tweeter-Halterung (1) vorgesehen sind, und durch das Einrasten der Clipsmittel (6) ausgeführt wird.

3. Anordnung nach Anspruch 2, **dadurch gekennzeichnet, dass** die Querrillen (10a, 10b) auf dem Grund der kreisförmigen Rille (3) vorgesehen sind und die Querrippen (5a, 5b) auf der "Sohlen"-Oberfläche des Montagefußes (4) der Tweeter-Halterung (1), vorgesehen sind.

4. Anordnung nach Anspruch 1, **dadurch gekennzeichnet, dass** sich die elastischen Clipsarme (9) parallel zu der "Sohlen"-Oberfläche des Montagefußes der Tweeter-Halterung in mindestens einer der seitlichen Oberflächen des Fußes (4) erstrecken und dass der vorstehende Kopf (8) seitlich abgefast ist, um das Einfügen des Montagefußes (4) in die kreisförmige Rille (3) zu erleichtern.

5. Anordnung nach einem der vorhergehenden Ansprüche, **dadurch gekennzeichnet, dass** der Montagefuß (4) einen Schraubschaft (11) zum Schrauben des Montagefußes (4) auf einem Rand der kreisförmigen Rille (3), der eine entsprechende Schraubbohrung (12) aufweist, umfasst.

6. Anordnung nach einem der vorhergehenden Ansprüche, **dadurch gekennzeichnet, dass** die Tweeter-Halterung (1) und die Lautsprecher-Halterung (2) aus Kunststoff hergestellt sind.

7. Anordnung nach einem der vorhergehenden Ansprüche, **dadurch gekennzeichnet, dass** der Tweeter, der Lautsprecher und ihre Halterungen Teil einer Audioausrüstung für ein Kraftfahrzeug sind.

## Claims

1. An arrangement of a tweeter support (1) over a speaker support (2), the speaker support (2), of substantially annular shape, including over a portion of its exterior surface a circular groove (3) to receive a mounting foot (4) of the tweeter support (1) of suitable shape, **characterized in that** the internal surface of the circular groove (3) and the surface of the mounting foot (4) of the tweeter support (1) including stop means (5a) (5b) and clipping means (6) cooperating for the fixing of the tweeter support (1) over the speaker support (2) and **in that** the circular groove (3) includes on its lateral edges openings (7) to receive in the final mounting position of the tweeter support (1) protruding heads (8) of the elastic clipping arms (9), formed on at least one lateral surface of the mounting foot (4).

2. The arrangement according to Claim 1, **characterized in that** the fixing of the tweeter support (1) over the speaker support (2) in its final position is accomplished by the positioning in abutment of the transverse ribs (5a, 5b) in the corresponding transverse grooves (10a, 10b), provided at the bottom of the circular groove (3) and on the "base" surface of the mounting foot (4) of the tweeter support (1) and the locking of the clipping means (6).

3. The arrangement according to Claim 2, **characterized in that** the transverse grooves (10a, 10b) are provided at the bottom of the circular groove (3) and the transverse ribs (5a, 5b) are provided on the "base" surface of the mounting foot (4) of the tweeter support (1).

4. The arrangement according to Claim 1, **characterized in that** the elastic clipping arms (9) extend in parallel to the "base" surface of the mounting foot of the tweeter support in at least one of the lateral surfaces of the foot (4) and the protruding head (8) is chamfered laterally to facilitate the insertion of the mounting foot (4) in the circular groove (3).

5. The arrangement according to one of the preceding claims, **characterized in that** the mounting foot (4) includes a screw shaft (11) for screwing the mounting foot (4) on an edge of the circular groove (3) including a corresponding screw hole (12).

6. The arrangement according to one of the preceding claims, **characterized in that** the tweeter support (1) and the speaker support (2) are made of plastic material.

7. The arrangement according to one of the preceding claims, **characterized in that** the tweeter, the speaker and their supports form part of an item of audio equipment for a motor vehicle.
